# EUROPÄISCHE PATENTSCHRIFT

(11) **EP 3 537 131 B1**
(45) Veröffentlichungstag und Bekanntmachung des Hinweises auf die Patenterteilung: **03.08.2022**
(21) Anmeldenummer: 19161149.0
(22) Anmeldetag: 06.03.2019
(51) Int. Cl.: G01M 17/007, G01M 7/02

(54) **VORRICHTUNG ZUM PRÜFEN VON FAHRZEUGEN**
DEVICE FOR TESTING VEHICLES
DISPOSITIF POUR TESTER DES VÉHICULES

(30) Priorität: 06.03.2018 DE 102018203296
(43) Veröffentlichungstag der Anmeldung: 11.09.2019
(73) Patentinhaber: AIP GmbH & Co. KG, 87490 Haldenwang (DE)
(72) Erfinder: Knestel, Anton, 87496 Hopferbach (DE); Becherer, Thomas, 87463 Dietmannsried (DE); Hartmann, Christian, 87452 Altusried (DE)
(74) Vertreter: MERH-IP Matias Erny Reichl Hoffmann Patentanwälte PartG mbB

(56) Entgegenhaltungen:
- EP-A1- 3 081 915
- US-A- 5 111 685
- US-A1- 2013 199 284

## Beschreibung

Die vorliegende Erfindung betrifft eine Vorrichtung zum Prüfen von Fahrzeugen und insbesondere zum Erfassen des Schwingungsverhaltens und des Komforts von Fahrzeugen. Über Aktoren wird eine Schwingungsanregung auf das Fahrzeug aufgebracht, um das Schwingungsverhalten und den Komfort zu erfassen. Beispielsweise kann eine Straßenfahrt simuliert werden.

Aus dem Stand der Technik sind hydraulische Prüfstände bekannt, welche zur Anregung des Fahrzeugs servo-hydraulische Stempel verwenden. Beispielsweise wird in der WO 9806590 A2 ein reifengekoppelter Straßensimulator beschrieben. Der reifengekoppelte Straßensimulator weist mehrere Stellglieder auf, die das Fahrzeug stützen.

Die US 2013/199284 A1 betrifft einen Prüfstand zum Simulieren einer Straße. Es wird ein Aktuator vorgesehen, welcher an einem Endstück einen weiteren Aktuator aufweist. Auf diesen ist wiederum eine Kontaktplatte vorgesehen zum Kontaktieren mit einem Fahrzeugreifen. Der erste Aktuator dient zum Aufbringen einer vertikalen Anregung entlang einer vertikalen Achse. Die zweiten Aktuatoren sind über eine Drehverbindung miteinander in Wirkverbindung und ermöglichen es, eine Kippbewegung der Kontaktplatte zu bewirken. Das US-Patent US 5,111,685 A offenbart ein Fahrbahnsimulator-Rückhaltesystem, das ein Fahrzeug an jedem seiner Räder auf simulierten Fahrbahnen hält, die Endlosriemen umfassen, die angetrieben werden, um eine Raddrehung zu bewirken.

Auch aus der EP 0577855 A1 ist ein Fahrzeugprüfstand bekannt, wobei über einen einzelnen Aktuator die Radaufstandsflächen bewegt werden.

Ausgehend vom vorstehend genannten Stand der Technik ist es eine Aufgabe der vorliegenden Erfindung, einen Fahrzeugprüfstand zum Prüfen von Fahrzeugen bereitzustellen mit welcher eine verbesserte Anregung des zu prüfenden Fahrzeugs ermöglicht wird.

Zur Lösung der Aufgaben wird ein Fahrzeugprüfstand zum Prüfen von Fahrzeugen gemäß den unabhängigen Ansprüchen 1 und 4 vorgeschlagen. Abhängige Ansprüche betreffen bevorzugte Ausführungsbeispiele der Erfindung.

Durch die Bereitstellung eines Hauptaktorsystems, welches das Hauptstellglied umfasst, welches entlang der Hauptanregungsachse beweglich ist sowie des Zusatzaktorsystems, welches das bewegliche Zusatzstellglied umfasst, das entlang der Zusatzanregungsachse beweglich ist, ist es möglich, Anregungsfrequenzen auf das Aufnahmeelement und somit auch auf das darauf aufgenommene Fahrzeug aufzubringen, entlang der Hauptanregungsachse sowie der Zusatzanregungsachse. Erfindungsgemäß verläuft die Hauptanregungsachse dabei in eine andere Richtung als die Zusatzanregungsachse, sodass eine Anregung entlang zumindest zweier verschiedener Achsen möglich ist. Die Hauptanregungsachse verläuft somit nicht in dieselbe Richtung wie die Zusatzanregungsachse. Mit anderen Worten, die Hauptanregungsachse ist nicht parallel zur Zusatzanregungsachse. Erfindungsgemäß verläuft die Zusatzanregungsachse in einer horizontalen Ebene, wobei die Hauptanregungsachse orthogonal zu dieser horizontalen Ebene verläuft. Die Richtungen der horizontalen Ebene können als X- und Y-Richtung bezeichnet werden. Die dazu orthogonale Richtung, also die vertikale Richtung, kann als Z-Richtung bezeichnet werden. Weiter vorteilhaft kann eine zweite Zusatzanregungsachse vorgesehen sein, welche in der horizontalen Ebene verläuft, sodass beide Zusatzanregungsachsen in der horizontalen Ebene vorliegen. Die Hauptanregungsachse kann orthogonal sowohl zur ersten als auch zur zweiten Zusatzanregungsachse sein.

Die Hauptanregungsachse ist die Bewegungsachse entlang derer das Hauptstellglied beweglich ist. Das Hauptstellglied kann dabei bevorzugt ein servohydraulischer Stempel sein. Die Zusatzanregungsachse ist die Bewegungsachse des Zusatzstellglieds, wobei das Zusatzstellglied bevorzugt ein servo-hydraulischer Stempel ist.

Das Zusatzstellglied ist am beweglichen Hauptstellglied vorgesehen . Erfindungsgemäß ist das Zusatzstellglied über ein Zwischenelement direkt an einem Ende des Hauptstellglieds befestigt, um gemeinsam mit dem Hauptstellglied bewegt zu werden. Weiter vorteilhaft ist das Zusatzstellglied somit vollständig am beweglichen Hauptstellglied aufgenommen. Weiter bevorzugt ist das Zusatzstellglied direkt am beweglichen Hauptstellglied vorgesehen, ohne Zwischenelement. Bevorzugt ist das Hauptstellglied in einem Hauptzylinder gelagert und kann sich entlang der Zylinderachse des Hauptzylinders abhängig von einem hydraulischen Druck bewegen. Bevorzugt wird der Druck im Hauptzylinder über eine erste und eine zweite Hauptleitung zum Zuführen/Abführen von Hydraulikflüssigkeit eingestellt. Das Hauptstellglied kann impulsartig angesteuert werden, um eine vorteilhafte Anregung mit hoher Beschleunigung zu erzeugen. Das am Hauptstellglied aufgenommene Zusatzstellglied wird dabei mit beschleunigt.

Das Zusatzstellglied ist (insbesondere direkt) an einem Ende des Hauptstellglieds aufgenommen. Das Zusatzstellglied kann vorteilhaft auch direkt am Ende des Hauptstellglieds fixiert sein. Mittels Hauptstellglied wird das Zusatzstellglied entlang der Hauptanregungsachse bewegt. Erfindungsgemäß ist das Zusatzaktorsystem zwischen dem Aufnahmeelement und dem Hauptaktorsystem angeordnet.

Das Hauptaktorsystem zur Anregung des Fahrzeugs bzw. der Räder und damit der Achsen des Fahrzeugs ist entlang der Hauptanregungsachse ausgebildet und die Hauptanregungsachse ist die vertikale Achse. Die vertikale Achse ist hier die Achse, welche aus der horizontalen Ebene bevorzugt orthogonal hervortritt, wobei die Ebene auf der das Fahrzeug aufgenommen ist bevorzugt die horizontale Ebene ist. Mit anderen Worten, verläuft die vertikale Achse bspw. in Richtung der Fahrzeughöhe.

Das Zusatzaktorsystem zur Anregung des Fahrzeugs bzw. der Räder und damit der Achsen des Fahrzeugs entlang der Zusatzanregungsachse ausgebildet und die Zusatzanregungsachse ist eine horizontale Achse.

Bevorzugt verläuft die Zusatzanregungsachse parallel zur Fahrzeuglängsachse. Die Fahrzeuglängsachse ist bevorzugt parallel zur horizontalen Ebene in welcher die Zusatzanregungsachse vorliegt. Die Zusatzanregungsachse kann auch in der horizontalen Ebene liegen und gleichzeitig orthogonal (oder quer) zur Fahrzeuglängsachse ausgerichtet sein. Die vertikale Achse ist bevorzugt die Fahrzeughochachse.

Die Zusatzanregungsachse kann vorteilhaft quer bzw. in einem 90°-Winkel zur Hauptanregungsachse verlaufen.

Erfindungsgemäß sind mehrere Hauptaktorsysteme vorgesehen, welche jeweils einen Aktor mit einem beweglichen Hauptstellglied aufweisen, auf dem jeweils ein Zusatzstellglied vorgesehen ist. Besonders bevorzugt ist es somit, die Anzahl der Hauptaktorsysteme auf die über die Aufnahmeelemente aufzunehmenden Fahrzeugreifen abzustimmen. Weiter vorteilhaft können die Hauptaktorsysteme zumindest teilweise (oder bevorzugt vollständig) von unabhängigen Servosystemen angesteuert werden. An jedem Hauptstellglied der einzelnen Hauptaktorsysteme ist ein eigenes (unabhängiges) Zusatzstellglied vorgesehen. Somit kann jedem Hauptaktorsystem ein eigenes Zusatzaktorsystem zugewiesen sein, welches unabhängig angesteuert werden kann.

Vorteilhaft kann das Zusatzaktorsystem ein entlang einer ersten Zusatzanregungsachse bewegliches erstes Zusatzstellglied und ein entlang einer zweiten Zusatzanregungsachse bewegliches zweites Zusatzstellglied umfassen. Die erste und zweite Zusatzanregungsachse sind bevorzugt parallel zueinander und in der horizontalen Ebene. Durch das Bereitstellen von zumindest zwei Zusatzstellgliedern für das Zusatzaktorsystem ist es einerseits möglich, die aufgebrachten Frequenzen und Kräfte besser einzustellen bzw. stärkere Kräfte aufzubringen und andererseits ist es möglich, auch die Zusatzstellglieder alternativ entlang unterschiedlicher Zusatzanregungsachsen anzuordnen, sodass eine Anregung in zwei verschiedenen Richtungen bzw. entlang zwei verschiedener Anregungsachsen ermöglicht wird.

Vorteilhaft kann das Zusatzaktorsystem ein vom Hauptaktorsystem unabhängiges Servosystem umfassen.

Erfindungsgemäß ist das Zusatzaktorsystem zum Hauptaktorsystem in Reihe geschaltet. Das Zusatzaktorsystem ist somit derart zum Hauptaktorsystem angeordnet sein, dass das Zusatzaktorsystem mit dem beweglichen Ende des Hauptstellglieds zusammen bewegt wird bzw. bewegbar angeordnet ist.

Das Hauptaktorsystem umfasst einen Hauptaktor (Aktor), welcher verschieblich in einer horizontalen Ebene an einem Fundament angeordnet ist. Vorteilhaft weist der Hauptaktor das Hauptstellglied auf sowie einen Fuß bzw. ein Fußelement, wobei der Hauptaktor über das Fußelement am Fundament befestigt wird. Es sind Schienen vorgesehen entlang welcher der Hauptaktor verschieblich angeordnet ist. Über Feststellungselemente oder Fixierungen ist ein Feststellen bzw. ein Fixieren des Hauptaktors möglich. Durch diesen verschieblichen Hauptaktor ist es möglich, verschiedene Längen und Breiten von Fahrzeugen an der Vorrichtung aufzunehmen und die Hauptaktoren der Hauptaktorsysteme entsprechend der benötigten Längen- und Breitenabmaße der zu prüfenden Fahrzeuge einzustellen.

Der Hauptaktor des Hauptaktorsystems ist über (erste) Schienen an einem Befestigungselement vorgesehen und der Hauptaktor ist entlang der Schienen verschiebbar. Die (ersten) Schienen können vorteilhaft entlang der Fahrzeuglängsachse verlaufen. Vorteilhaft sind zusätzliche Schienen vorgesehen, welche quer zur Fahrzeuglängsachse (bzw. quer oder orthogonal zu den ersten Schienen) verlaufen, sodass ein Verschieben in der horizontalen Ebene entlang verschiedener Richtungen möglich ist. Jeder der mehreren Hauptaktoren somit optimal und einfach verstellt werden.

Der Hauptaktor des Hauptaktorsystems ist über erste Schienen und über zweite Schienen am Befestigungselement (bevorzugt Betonfundament) angebracht. Die ersten Schienen verlaufen entlang einer ersten Verschieberichtung und die zweiten Schienen verlaufen entlang einer zweiten Verschieberichtung. Die ersten Schienen können durchgehend entlang des Befestigungselements verlaufen (bevorzugt entlang der Fahrzeuglängsachse).

Die Vorrichtung kann vorteilhaft über Luftfedern gelagert sein. Bevorzugt ist das Befestigungselement über Luftfedern am Boden befestigt.

Es können Festsetzungselemente vorgesehen sein über welche die Hauptaktoren des Hauptaktorsystems an den Schienen festgesetzt werden können.

Die Eigenfrequenz des Hauptaktorsystems kann vorteilhaft geringer sein als die Eigenfrequenz des Zusatzaktorsystems.

Am beweglichen Ende des Hauptstellglieds kann vorteilhaft eine Aufnahmeplatte vorgesehen sein und das Zusatzstellglied kann an der Aufnahmeplatte angeordnet bzw. fixiert sein.

Das Zusatzaktorsystem kann drei und bevorzugt vier Aktoren umfassen. Die Aktoren können dabei parallel zueinander ausgerichtet sein derart, dass diese dieselbe Bewegungsrichtung aufweisen. Die Aktoren können zudem hydraulische und/oder elektrische Aktoren sein. Durch das Vorsehen von mehreren Aktoren für das Zusatzaktorsystem, welche insbesondere parallel zueinander ausgerichtet sind, ist es möglich, einen sehr hohen Frequenzbereich zu erreichen, da die einzelnen Aktoren sehr klein gestaltet werden können und diese in Summe dennoch hohe Anregungskräfte aufbringen können. Zudem kann dadurch der Frequenzbereich des gesamten Anregungssystems erhöht werden.

Das Zusatzaktorsystem kann zumindest ein Federelement aufweisen, welches mit dem Aufnahmeelement kontaktiert ist. Durch ein solches Federelement kann einerseits der Frequenzbereich optimiert werden und andererseits kann die Beanspruchung der Zusatzstellglieder bzw. des Zusatzstellglieds des Zusatzaktorsystems reduziert werden, da das Federelement das Zusatzstellglied unterstützt.

Das Zusatzaktorsystem kann vier Aktoren umfassen, welche quadratisch zueinander angeordnet sind derart, dass je ein Aktuator in einer Ecke des Quadrats angeordnet ist. Diese vorteilhafte Anordnung der Aktoren des Zusatzaktorsystems ermöglicht ein möglichst gleichmäßiges Aufbringen der Anregung, wobei zudem ein sehr hoher Frequenzbereich von bis zu 600 Hz simuliert werden kann.

Erfindungsgemäß ist die Vorrichtung zum Prüfen von Fahrzeugen als Flachbahnprüfstand ausgebildet sein. Dies hat den Vorteil, dass ein Fahrzeug lediglich auf den Prüfstand bewegt werden muss, sodass die Aufnahmeelemente mit den Reifen des Fahrzeugs in Kontakt treten. Ein Prüfen des Fahrzeugs über den vorteilhaften Frequenzbereich ist somit auf einfache Weise möglich. Bei dem Flachbahnprüfstand kann das Anregungssystem in einer Prüfstandskammer eingebaut sein, sodass das Fahrzeug lediglich in die Prüfstandskammer einfahren muss, um direkt am Anregungssystem positioniert zu werden.

Das Hauptaktorsystem kann zumindest einen doppeltwirkenden Zylinder umfassen. Dies hat den Vorteil, dass der vergleichsweise große hydraulische Zylinder des Hauptaktorsystems entsprechend in zwei Richtungen angesteuert werden kann, sodass das Fahrzeug vorteilhaft angeregt werden kann. Doppeltwirkende Zylinder haben zudem den Vorteil einer möglichst gleichmäßigen und schnellen Anregung, sodass die Anregung des Fahrzeugs verbessert werden kann. Zusätzlich kann auch das Zusatzaktorsystem zumindest einen doppeltwirkenden Zylinder aufweisen. Dies hat den Vorteil, dass zusätzlich zum doppelt wirkenden Zylinder des Hauptaktorsystems auch ein doppelt wirkender Zylinder für das Zusatzaktorsystem bereitgestellt wird, sodass über den gesamten Anregungsfrequenzbereich ein rasches und kraftvolles Anregen des Fahrzeugs möglich ist.

Das Hauptaktorsystem kann einen doppeltwirkenden Hydraulikzylinder umfassen und das Zusatzaktorsystem kann zumindest einen einfach wirkenden Hydraulikzylinder umfassen (Plunger-Zylinder). Auf diese Weise kann eine vorteilhafte Vorrichtung zum Prüfen von Fahrzeugen bereitgestellt werden, da ein vereinfachter Aufbau vorgesehen ist und zudem der Anregungsfrequenzbereich erweitert ist. Zusätzlich kann ein Federelement im Zusatzaktorsystem vorgesehen sein zum Rückholen des einfach wirkenden Hydraulikzylinders bzw. zum Rückholen des Kolbens des einfach wirkenden Zylinders.

Das Hauptaktorsystem kann zumindest einen Plunger-Zylinder umfassen und/oder das Zusatzsystem kann auch einen Plunger-Zylinder umfassen. Durch die Bereitstellung eines Plunger-Zylinders kann auf einfache Weise das Anregungssystem bereitgestellt werden, sodass ein vereinfachter Aufbau gewährleistet ist und gleichzeitig auch der erfindungsgemäß hohe Frequenzbereich gewährleistet wird.

Mit dem Hauptaktorsystem können Anregungsfrequenzen bis zu einer ersten Grenzfrequenz (welche bevorzugt kleiner gleich der Resonanzfrequenz des Hauptaktorsystems ist) aufgebracht werden und über das Zusatzaktorsystem können Anregungsfrequenzen, die größer sind als die erste Frequenz, aufgebracht werden. Somit wird ein langsameres großes Hauptaktorsystem für die niedrigen Anregungsfrequenzen bereitgestellt und ein kleines, schnelles Zusatzaktorsystem mit dem Anregungsfrequenzen größer als die erste Grenzfrequenz aufgebracht werden können. Durch diesen zweiteiligen Aufbau ist es möglich, einen sehr breiten Frequenzbereich abzudecken und somit eine optimale Anregung zu gewährleisten. Mit anderen Worten, das Hauptaktorsystem kann zum Anregen des Fahrzeugs bis zu einer ersten Frequenz konfiguriert sein und das Zusatzaktorsystem zum Anregen des Fahrzeugs über der ersten Frequenz, und in eine andere Richtung als das Hauptaktorsystem.

Das Zusatzaktorsystem ist (räumlich) zwischen dem Aufnahmeelement und dem Hauptaktorsystem angeordnet sein. Durch diese Anordnung ist gewährleistet, dass zur Anregung in niedrigen Frequenzbereichen das Hauptaktorsystem über das feststehende (nicht direkt aktuierte) Zusatzaktorsystem die Anregung in das Aufnahmeelement bzw. in das Fahrzeug, welches am Aufnahmeelement aufgenommen ist, einbringt. Für hohe Frequenzen kann das Zusatzaktorsystem direkt über das Aufnahmeelement die hohen Anregungsfrequenzen in das Fahrzeug aufbringen.

Die Masse des Zusatzaktorsystems kann geringer sein als die Masse des Hauptaktorsystems. Da insbesondere die Eigenfrequenz der Aktorsysteme maßgeblich von den zu bewegenden Massen abhängt, ist es durch die Wahl eines kleinen Zusatzaktorsystems mit geringer Masse und einem Hauptaktorsystem mit größerer Masse möglich, einen breiten Frequenzbereich für die Anregung des Fahrzeugs abzudecken. Mit anderen Worten kann das Hauptaktorsystem eine zu bewegende Masse aufweisen, die größer ist als die zu bewegende Masse des Zusatzaktorsystems. Besonders vorteilhaft kann das Hauptaktorsystem die zu bewegende Masse des Zusatzaktorsystems beinhalten. Insbesondere kann die vom Hauptaktorsystem zu bewegende Masse die zu bewegende Masse des Zusatzaktorsystems beinhalten. Diese charakteristische Ausgestaltung führt zu einer schnellen und einfach aufgebauten Vorrichtung, welche den charakteristisch breiten Frequenzbereich für das Aufbringen der Anregungen des Fahrzeugs abdecken kann.

Vorteilhaft kann die Eigenfrequenz des Hauptaktorsystems geringer sein als die Eigenfrequenz des Zusatzaktorsystems. Weiter vorteilhaft ist die Eigenfrequenz des Hauptaktorsystems maximal ein Drittel der Eigenfrequenz des Zusatzaktorsystems. Durch die entsprechende Wahl der Haupt- und Zusatzsysteme ist es somit möglich, einen sehr breiten Frequenzbereich für die Anregung des Fahrzeugs abzudecken.

Der Fahrzeugprüfstand kann vier oder bevorzugt acht (bzw. zehn) (separate) Aufnahmelemente aufweisen und jedem Aufnahmeelement ist ein eigenes Anregungssystem zugeordnet sein. Durch diese Ausgestaltung wird eine Vorrichtung bereitgestellt, sodass Fahrzeuge an allen Reifen über die Aufnahmeelemente kontaktiert werden können und über die separaten Anregungssysteme angeregt werden können.

Insbesondere kann am beweglichen Ende des Hauptstellglieds eine Hauptaufnahmeplatte vorgesehen sein und das Zusatzstellglied kann auf der Hauptaufnahmeplatte angeordnet sein. Durch diese vorteilhafte Anordnung kann eine einfache Vorrichtung bereitgestellt werden, welche den charakteristischen Frequenzbereich abdecken kann.

Das Zusatzstellglied kann mit dem Hauptstellglied mechanisch (direkt) gekoppelt sein. Durch diese mechanische Kopplung ist es möglich, das Zusatzstellglied zu bewegen bzw. das gesamte Zusatzaktorsystem zu bewegen, wenn das Hauptstellglied aktuiert wird. Durch diese charakteristische Anordnung ist es möglich, eine Überlagerung von verschiedenen Frequenzen bzw. ein gleichzeitiges Aufbringen von verschiedenen Frequenzen möglich. Diese können auch größer als die erste Grenzfrequenz sein.

An einem Ende des Hauptstellglieds ist das Zusatzstellglied derart angeordnet, dass bei Bewegung des Hauptstellglieds gleichzeitig auch das Zusatzstellglied mitbewegt wird. Die Richtungen sind dabei unterschiedlich und bevorzugt orthogonal zueinander.

Das Hauptaktorsystem und das Zusatzaktorsystem können hydraulische Systeme sein und beide System können über eine separate Hydraulikeinspeisung verbunden sein. Das Zusatzaktorsystem kann auch elektromechanisch betätigt werden.

Das Hauptaktorsystem kann als Hauptstellglied einen ersten Hydraulikzylinder mit einem beweglichen Endabschnitt umfassen und das Zusatzaktorsystem kann als Zusatzstellglied zumindest einen zweiten Hydraulikzylinder umfassen, wobei zumindest ein zweiter Hydraulikzylinder am beweglichen Endabschnitt des ersten Hydraulikzylinders befestigt sein kann. Durch diese vorteilhafte Anordnung des Zusatzaktorsystems relativ zum Hauptaktorsystem kann auf einfache Weise der vorteilhafte Frequenzbereich für die Anregung des Fahrzeugs erreicht werden.

Das Hauptaktorsystem kann bevorzugt bis zu einer Anregungsfrequenz von 50 Hz eingesetzt werden und das Zusatzaktorsystem für Frequenzen über 40 Hz. Besonders bevorzugt wird das Zusatzaktorsystem bis zu einer Frequenz von 700 Hz eingesetzt. Durch die entsprechende Wahl der Aktoren des Zusatzaktorsystems ist es möglich eine Frequenz von bis zu 700 Hz zu erreichen.

Das Aufnahmeelement kann auch eine Radpfanne sein zum Aufnehmen eines Rads des zu prüfenden Fahrzeugs. Es ist somit ein effizientes Aufbringen der Anregungsfrequenzen über eine Radpfanne als Aufnahmeelement möglich.

Der Fahrzeugprüfstand kann bevorzugt zehn Hauptaktorsysteme und zehn Zusatzaktorsysteme umfassen, wobei jedes Hauptaktorsystem einen hydraulischen Stempel umfasst, an dem ein Zusatzaktorsystem vorgesehen ist und bevorzugt daran fixiert ist.

Jedes Zusatzaktorsystem kann bevorzugt zwei (weiter bevorzugt vier) hydraulische Zusatzstempel umfassen. Die Hauptaktorsysteme und die Zusatzaktorsysteme können dazu eingerichtet sein, ein am Prüfstand positioniertes Fahrzeug über die an den Aufnahmeelementen aufnehmbaren Fahrzeugreifen in horizontaler Richtung mit zumindest einer Anregungsfrequenz anzuregen. Durch diesen vorteilhaften Fahrzeugprüfstand ist es möglich auf einfache und effiziente Weise das Fahrzeug anzuregen und zudem die Anregung in einem möglichst breiten Frequenzbereich zu gewährleisten.

Bevorzugt ist die zu bewegende Masse des Zusatzaktorsystems ≤ 80 Kg und die zu bewegende Masse des Hauptaktorsystems ≤ 1000 Kg für den Fall, dass kein Fahrzeug auf der Vorrichtung platziert ist und somit für den Fall, dass die Vorrichtung unbelastet ist. Durch diese Ausgestaltung ist es möglich, den Betrieb im vorteilhaften Frequenzbereich zu gewährleisten.

Gemäß einem weiteren Aspekt der Erfindung wird ein vorteilhaftes Verfahren zum Ansteuern eines Prüfstands nach zumindest einem der vorgenannten Aspekte vorgeschlagen. Das Verfahren umfasst die Schritte des Ansteuerns des Hauptaktorsystems zur Erzeugung einer Anregung entlang der Hauptanregungsachse sowie das Ansteuern des Zusatzaktorsystems unabhängig von der Ansteuerung des Hauptaktorsystems. Das erfindungsgemäße Verfahren schlägt somit ein unabhängiges Ansteuern des Hauptaktorsystems und Zusatzaktorsystems vor.

Weiter vorteilhaft kann das Verfahren zudem ein Anregen entlang einer X-und/oder Y-Richtung in einer horizontalen Ebene umfassen, unabhängig von der Anregung entlang der vertikalen Hauptanregungsachse (bzw. Z-Achse). Vorteilhaft können zudem die Räder des Fahrzeugs über Feststellmittel, wie beispielsweise Keile, still gesetzt werden. Zudem können Zurrgurte verwendet werden, um die Fahrzeugreifen am Aufnahmeelement festzusetzen.

Vorteilhafte Ausgestaltungen und weitere Details der vorliegenden Erfindung werden im Folgenden anhand verschiedener Ausführungsbeispiele mit Bezug auf die schematischen Figuren beschrieben. In den schematischen Zeichnungen wird die Erfindung näher erläutert.

### Figuren

Figur 1: zeigt eine Überblicksansicht der Vorrichtung zum Prüfen von Fahrzeugen
Figur 2a: zeigt eine Ausführungsform des Anregungssystems in einer Detailansicht
Figur 2b: zeigt eine weitere Detailansicht des Anregungssystems
Figur 3a: zeigt eine Überblicksansicht einer Ausführungsform des Anregungssystems
Figur 3b: zeigt eine weitere Detailansicht des Anregungssystems

Im Folgenden werden verschiedene Beispiele der vorliegenden Erfindung detailliert unter Bezugnahme auf die Figuren beschrieben. Gleiche bzw. ähnliche Elemente werden mit gleichen Bezugszeichen bezeichnet. Die vorliegende Erfindung ist jedoch nicht auf die beschriebenen Merkmale begrenzt, sondern umfasst weiterhin Modifikationen von Merkmalen verschiedener Beispiele im Rahmen des Umfangs der unabhängigen Ansprüche.

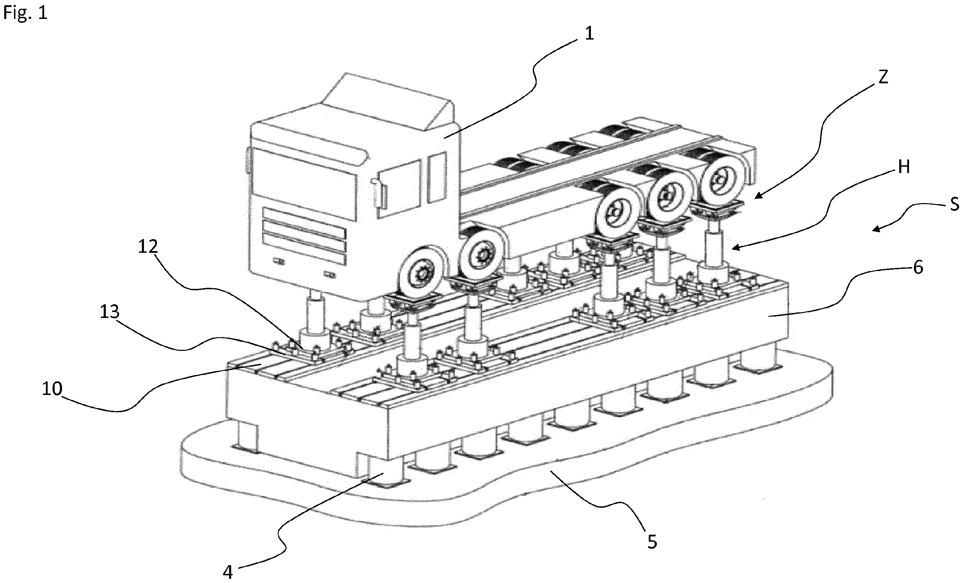

In Figur 1 ist eine Übersicht eines Prüfstands gemäß der vorliegenden Erfindung. Die vorliegende Erfindung richtet sich auf eine Vorrichtung zum Prüfen von Fahrzeugen 1, wobei, wie in Figur 1 dargestellt, das Fahrzeug 1 beispielsweise ein Lastkraftfahrzeug ist, welches eine Vielzahl (bspw. zehn) von Achsen und Rädern aufweist. Die einzelnen Räder des Fahrzeugs 1 werden über Aufnahmeelemente A und den dazugehörigen Anregungssystemen S aufgenommen. Die Anregungssysteme S weisen jeweils ein Hauptaktorsystem H sowie ein (dazugehöriges) Zusatzaktorsystem Z auf. Durch die Bereitstellung von Anregungssystemen für die Räder des aufzunehmenden Fahrzeugs 1 ist es möglich, eine hochgradig individuelle Anregung des Fahrzeugs 1 zu erreichen. Es können dabei sehr unterschiedliche Richtungen und Frequenzen sowie Beschleunigungen simuliert werden.

Das Anregungssystem S weist das Hauptaktorsystem H auf, welches über Schienen und Platten an einem Schwingfundament 6 fixierbar angeordnet ist. Durch die vorgesehenen Schienen können die jeweiligen Hauptaktorsysteme H individuell und beliebig verschoben werden, um verschiedene Achsabstände und Radpositionen des aufzunehmenden Fahrzeugs 1 zu berücksichtigen. Es ist somit eine individuelle und maßgeschneiderte Aufnahme von verschiedenen Fahrzeugen möglich. Das Vorsehen der Schienen erlaubt zudem ein leichtes Verschieben der jeweiligen Anregungssysteme S sowie eine sichere und genaue Führung.

Das Schwingfundament 6 selbst ist über die Luftfedern 4 am Boden bzw. einem Fundament 5 (und bspw. Unterflur) angeordnet. Über die Luftfedern 4 werden Schwingungen aufgenommen, welche ansonsten in das Fundament 5 weitergeleitet werden. Zur Aufnahme der jeweiligen Hauptaktorsysteme H sind verschiedene Platten bzw. Elemente vorgesehen. Insbesondere ist ein Längselement bzw. eine erste Schiene 10 vorgesehen, welches entlang der Fahrzeuglängsachse angeordnet ist, um eine Längenverstellung entlang der Fahrzeuglängsachse der einzelnen Hauptaktorsysteme H zu ermöglichen. Auf diesen Schienen 10 sind Querplatten 13 vorgesehen. Jede einzelne Querplatte 13 (untere Fußplatte) weist Querschienen (zweite Schienen) auf, in welche eine Fußplatte 12 des Hauptaktorsystems H eingreift. Diese Fußplatte 12 wird auch als obere Fußplatte 12 bezeichnet. Die obere Fußplatte 12 ist über Schienen an der unteren Fußplatte aufgenommen. Die einzelnen Hauptaktorsysteme weisen somit jeweils eigene Platten und Schienen zur Längs- und Querverschiebung und somit zur individuellen Anpassung des Prüfstands an die zu prüfenden Fahrzeuge auf.

Um bei schweren Fahrzeugen außer der Z-Richtung (vertikale Richtung) auch eine X-Richtung zu simulieren, wird erfindungsgemäß vorgeschlagen, dass über die Hauptaktoren zusätzlich eine in Längsrichtung, also in X-Richtung, verschiebbare Einheit angeordnet ist. Diese Einheit wird über ein separates Servosystem angesteuert. Daher ist erfindungsgemäß vorgesehen, zumindest eine zweite, in Y-Richtung verschiebbare Einheit, vorzusehen, die über ein Servosystem angesteuert wird. Es ist weiterhin auch möglich, beide Zusatzrichtungen X und Y zu kombinieren. Diese Einheit (das Zusatzaktorsystem Z) wird dabei direkt auf dem Stempel des Hauptaktors aufgebracht. Damit die Bewegung der X-Richtung nicht in eine Drehbewegung des Rads umgewandelt wird, können die Räder des Fahrzeugs durch Feststellbremsen still gesetzt werden. Es können aber auch Hilfsmittel wie Keile und Zurrgurte vorteilhaft verwendet werden.

In Figur 1 ist die Prüfanlage gemäß der vorliegenden Erfindung für ein Nutzfahrzeug dargestellt. Das Fahrzeug steht mit allen Rädern auf den hydraulischen Aktoren. Die Aktoren sind in Längs- und Querrichtung verschiebbar angeordnet, damit der unterschiedlichen Fahrzeuggeometrie bzw. Achsabständen und Spurbreite Rechnung getragen werden kann. Die Aktoren werden auf dem federgelagerten Schwingfundament 6 montiert. Das Schwingfundament 6 wird über Luftfedern 4 vom Unterboden schwingungstechnisch abgekoppelt.

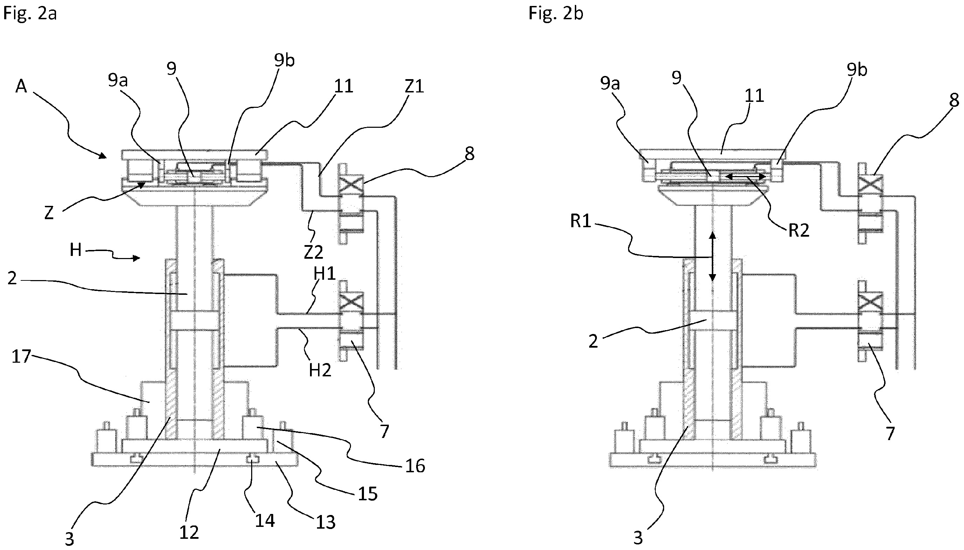

In Figur 2a ist ein Ausführungsbeispiel des Anregungssystems S dargestellt, wobei das Hauptaktorsystem H mit dem Hauptstellglied 2 im Hauptzylinder 3 dargestellt ist. Das Hauptstellglied wird über die erste Hauptleitung H1 bzw. die zweite Hauptleitung H2 mit Hydraulikflüssigkeit (z. B. Öl) beaufschlagt. Zur Steuerung wird das Hauptservoventil 7 verwendet. Dieses Hauptservoventil 7 ist unabhängig vom Zusatzservoventil 8. Das Zusatzservoventil 8 dient zur Ansteuerung des Zusatzstellglieds 9 über die erste Zusatzleitung Z1 sowie die zweite Zusatzleitung Z2. Der Hauptzylinder 3 des Hauptaktorsystems H ist über denFuß 17 auf der oberen Fußplatte 12 befestigt. Die obere Fußplatte 12 wird über die obere Fixierung 16 an den Schienen der unteren Fußplatte 13 fixiert. Die untere Fußplatte 13 weist dazu die Schienen 14 auf, entlang welcher die obere Fußplatte 12 mit dem Hauptzylinder 3 sowie dem Zusatzaktorsystem Z verschoben werden kann. Somit wird ein leichtes und präzises Verschieben des Anregungssystems S entlang der Schienen 14 ermöglicht. Zur Fixierung des Anregungssystems S werden die obere Fixierung 16 sowie die untere Fixierung 15 vorgeschlagen. Die untere Fixierung 15 dient zum Festsetzen entlang der Schienen des Längselements 10.

Am Ende des Hauptstellglieds 2, welches aus dem Hauptzylinder 3 herausragt, ist das Zusatzaktorsystem Z vorgesehen. Das Zusatzaktorsystem ist auf einem Aufnahmeelement A fixiert und bewegt sich mit dem Hauptstellglied 2. Das Zusatzaktorsystem Z umfasst das Zusatzstellglied 9, welches ein erstes Kopplungselement 9a und ein zweites Kopplungselement 9b zur Verbindung mit der Platte 11 aufweist. Am Ende des Hauptstellglieds 2 ist eine Platte vorgesehen, auf welcher das Zusatzstellglied 9 vorgesehen ist. Zudem sind erfindungsgemäß Hilfsschienen zur Lagerung der Platte 11 vorgesehen. Diese Hilfsschienen ermöglichen eine Verschiebung der Platte 11 entlang der Zusatzanregungsachse des Zusatzstellglieds 9. Die Zusatzanregungsachse R2 verläuft in der horizontalen Ebene, also der Ebene welche parallel zur Aufnahmeebene des Fahrzeugs 1 liegt. Der Fahrzeugreifen wird mit der Platte 11 kontaktiert, wobei das Fahrzeuggewicht über die Hilfsschienen aufgenommen werden kann, um in das Hauptstellglied 2 eingeleitet zu werden. Über das Hauptstellglied 2 kann eine vertikale Bewegung des aufgenommenen Rads des Fahrzeugs 1 angeregt werden. Zur horizontalen Anregung ist das Zusatzstellglied 9 vorgesehen.

In Figur 2b ist eine weitere Ausführungsform des Anregungssystems S dargestellt. Es wird das Hauptstellglied 2 vorgeschlagen mit der Hauptanregungsachse R1, welche entlang der vertikalen Achse des Systems verläuft. Die Anregung über das Hauptstellglied 2 ermöglicht eine vertikale Anregung des Fahrzeugs 1 und somit eine Anregung entlang der Hochachse des Fahrzeugs. Orthogonal dazu ist die Zusatzanregungsachse R2 vorgesehen, entlang welcher das Zusatzstellglied 9 beweglich über das Zusatzservoventil 8 angesteuert werden kann. Zur Aufnahme des Fahrzeugrads ist die Platte 11 vorgesehen, welche über das erste Koppelelement 9a und das zweite Koppelelement 9b verschieblich fixiert ist. Bei der Ausführungsform in Figur 2b greift das Zusatzstellglied 9 direkt an das erste und zweite Kopplungselement 9a, 9b zum Verschieben der Platte 11.

Die Ansteuerung über das Hauptservoventil 7 und die Ansteuerung über das Zusatzservoventil 8 erfolgt unabhängig voneinander. Der Zusatzaktor mit dem Zusatzstellglied 9 ist oberhalb des Hauptaktors montiert. Der Hauptaktor wird dabei über das Hauptservoventil 7 angesteuert und der Zusatzaktor zusätzlich über das kleinere Zusatzservoventil 8. Beide Aktoren sind somit unabhängig voneinander steuer- und regelbar.

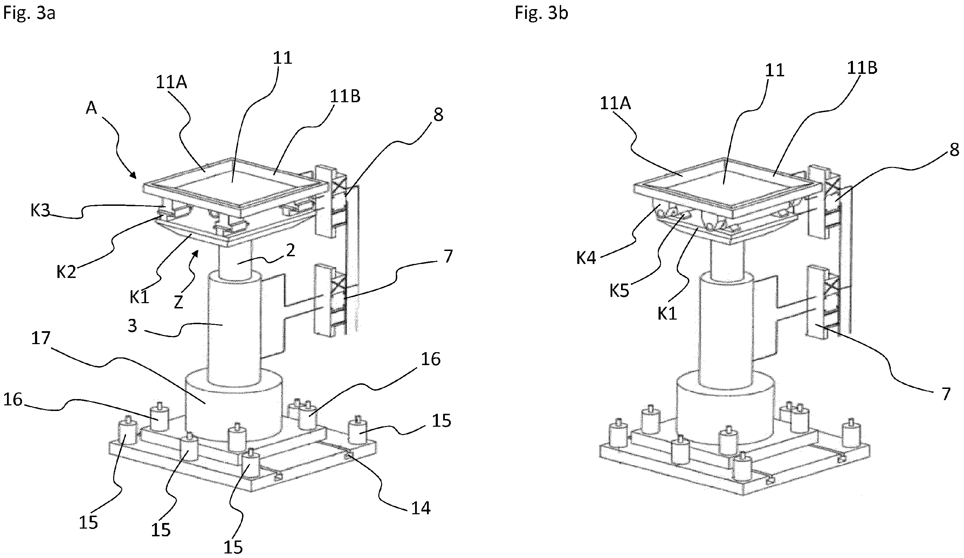

In den Figuren 3a und 3b sind korrespondierende Darstellungen zu den Ausführungsformen in Figur 2a und 2b dargestellt. In Figur 3a ist die Aufnahme des Zusatzaktorsystems Z detailliert dargestellt. Am Ende des Hauptstellglieds 2, welches nicht im Hauptzylinder 3 aufgenommen ist, ist das Zusatzaktorsystem Z dargestellt. Das Zusatzaktorsystem Z umfasst die Kopfplatte K1 mit den Kopfschienen K2. Entlang dieser Kopfschienen und den jeweiligen Führungen K3 kann die Platte 11 verschoben werden. Das Zusatzstellglied 9 wird über das Zusatzservoventil 8 angesteuert. Nach Aufbringung eines entsprechenden Drucks wird eine Verschiebung der Platte 11 entlang der Führung K3 und der Kopfschiene K2 ermöglicht. Bevorzugt ist die Platte 11 an vier Führungen K3 und vier korrespondierenden Kopfschienen K2 einer Kopfplatte K1 gelagert. Die Kopfplatte K1 ist bevorzugt direkt und fest mit dem Ende des Hauptstellglieds 2 verbunden. Die Platte 11 weist zur verbesserten Aufnahme des Fahrzeugrads eine Längswand 11a sowie eine Querwand 11b auf, sodass die Platte 11 eine Art Schüssel zur sicheren Aufnahme eines Fahrzeugreifens bildet.

In Figur 3b ist eine weitere Ansicht der Ausführungsform gemäß Figur 2b dargestellt, wobei Befestigungselemente K5 vorgesehen sind, welche direkt auf der Kopfplatte K1 befestigt sind. Das Zusatzstellglied 9 ist in Verbindung mit den Begrenzungselementen K4, welche fest mit der Platte 11 verbunden sind.

Gemäß einem weiteren Aspekt der Erfindung kann die Vorrichtung über ein Schwingfundament (6) und eine Vielzahl von Luftfedern (4) mit einem Fundament (5) in Verbindung stehen.

Gemäß einem weiteren Aspekt der Erfindung können Festsetzungselemente vorgesehen sein zum Festsetzen der Hauptaktoren des Hauptaktuatorsystems (H) an den Schienen.

Gemäß einem weiteren Aspekt der Erfindung kann die Eigenfrequenz des Hauptaktorsystems (H) geringer sein als die Eigenfrequenz des Zusatzaktorsystems (Z).

Gemäß einem weiteren Aspekt der Erfindung kann am beweglichen Ende des Hauptstellglieds (2) eine Aufnahmeplatte vorgesehen sein und das Zusatzstellglied (9) an der Aufnahmeplatte angeordnet sein.

## Patentansprüche

1. Fahrzeugprüfstand zum Prüfen von Fahrzeugen (1), mit
- Aufnahmeelementen (A), wobei die Aufnahmeelemente (A) jeweils eine Platte (11) aufweisen mit einem Aufstandsbereich zur Kontaktierung mit einem Rad des Fahrzeugs (1);
- einem mit dem Aufnahmeelement (A) verbundenen Anregungssystem (S) zum Aufbringen von Anregungsfrequenzen, wobei
der Fahrzeugprüfstand eine Vielzahl von Anregungssystemen (S) aufweist und das am Prüfstand positionierbare Fahrzeug (1) über die Anregungssysteme (S) mit zumindest einer Anregungsfrequenz anregbar ist,
wobei jedes Anregungssystem (S) ein Hauptaktorsystem (H) mit einem entlang einer Hauptanregungsachse (R1) beweglichen Hauptstellglied (2) und ein Zusatzaktorsystem (Z) mit einem entlang einer Zusatzanregungsachse (R2) beweglichen Zusatzstellglied (9) umfasst, und sich das Zusatzaktorsystem (Z) mit dem Hauptstellglied (2) bewegt und die Hauptanregungsachse (R1) in eine andere Richtung als die Zusatzanregungsachse (R2) verläuft;
wobei das Zusatzstellglied (9) an einem Ende des Hauptstellglieds (2) aufgenommen ist und mittels Hauptstellglied (2) entlang der Hauptanregungsachse (R1) bewegbar ist;
wobei das Zusatzaktorsystem (Z) zwischen dem Aufnahmeelement (A) und dem Hauptaktorsystem (H) angeordnet ist;
wobei das Hauptaktorsystem (H) zur Anregung des Fahrzeugs (1) entlang der Hauptanregungsachse (R1) ausgebildet ist und die Hauptanregungsachse (R1) die vertikale Achse ist;
wobei das Zusatzaktorsystem (Z) zur Anregung des Fahrzeugs (1) entlang der Zusatzanregungsachse (R2) ausgebildet ist und die Zusatzanregungsachse (R2) eine horizontale Achse ist;
**dadurch gekennzeichnet, dass**
das Hauptaktorsystem (H) einen Hauptaktor mit dem Hauptstellglied (2) umfasst, und das Hauptaktorsystem (H) verschieblich in einer horizontalen Ebene an einem Fundament angeordnet ist;
wobei der Hauptaktor des Hauptaktorsystems (H) über Schienen an einem Befestigungselement vorgesehen ist und der Hauptaktor entlang von Schienen verschiebbar ist;
wobei der Hauptaktor des Hauptaktorsystems (H) über erste Schienen (10) und zweite Schienen am Befestigungselement angebracht ist und wobei die ersten Schienen (10) entlang einer ersten Verschieberichtung verlaufen und die zweiten Schienen entlang einer zweiten Verschieberichtung, welche in eine andere Richtung verläuft als die erste Verschieberichtung; und
wobei zum Verschieben der Platte (11) entlang der Zusatzanregungsachse (R2) des Zusatzstellgliedes (9) Hilfsschienen vorgesehen sind, auf welchen die Platte (11) gelagert ist, wobei das Fahrzeuggewicht über die Hilfsschienen aufgenommen wird.

2. Fahrzeugprüfstand nach Anspruch 1, wobei die Zusatzanregungsachse (R2) quer bzw. in einem 90°-Winkel zur Hauptanregungsachse (R1) verläuft.

3. Fahrzeugprüfstand nach zumindest einem der vorhergehenden Ansprüche, wobei das Zusatzaktorsystem (Z) ein vom Hauptaktorsystem (H) unabhängiges Servosystem umfasst.

4. Verfahren zum Ansteuern eines Fahrzeugprüfstands nach zumindest einem der vorhergehenden Ansprüche, umfassend die Schritte: Ansteuern des Hauptaktorsystems (H) zur Erzeugung einer Anregung entlang der Hauptanregungsachse (R1); und Ansteuern des Zusatzsaktorsystems (Z) zur Erzeugung einer Anregung entlang der Zusatzanregungsachse (R2) unabhängig von der Ansteuerung des Hauptaktorsystems (H).

## Claims

1. A vehicle test bench for testing vehicles (1), comprising:
- receiving elements (A), said receiving elements (A) each including a plate (11) with a contact area for contacting a wheel of the vehicle (1);
- a receiving element (A) connected to said excitation system (S) for applying excitation frequencies, wherein
said vehicle test bench includes a plurality of excitation systems (S) and the vehicle (1) positionable on the test bench can be excited by means of the excitation systems (S) at at least one excitation frequency,
wherein each excitation system (S) comprises a main actuator system (H) with a main actuating element (2) movable along a main excitation axis (R1) and an additional actuator system (Z) having an additional actuating element (9) movable along an additional excitation axis (R2), and said additional actuator system (Z) moves with said main actuating element (2) and said main excitation axis (R1) extends in a different direction than said additional excitation axis (R2);
wherein said additional actuating element (9) is connected to an end of said main actuating element (2) and is movable along said main excitation axis (R1) by means of said main actuating element (2);
wherein said additional actuator system (Z) is arranged between the receiving element (A) and said main actuator system (H);
wherein said main actuator system (H) is configured to excite the vehicle (1) along said main excitation axis (R1) and said main excitation axis (R1) is the vertical axis;
wherein said additional actuator system (Z) is configured to excite the vehicle (1) along said additional excitation axis (R2) and said additional excitation axis (R2) is a horizontal axis;
**characterized in that**
said main actuator system (H) comprises a main actuator with said main actuating element (2) and said main actuator system (H) is displaceably arranged in a horizontal plane on a foundation;
wherein said main actuator of said main actuator system (H) is attached to a fastening element via rails and said main actuator is displaceable along rails;
wherein said main actuator of said main actuator system (H) is attached to said fastening element via first rails (10) and second rails, and wherein said first rails (10) extend along a first direction of displacement and said second rails extend along a second direction of displacement extending in a different direction than said first direction of displacement; and
wherein, for moving said plate (11) along said additional excitation axis (R2) of said additional actuator (9), auxiliary rails are provided, on which said plate (11) is mounted, the vehicle weight L being absorbed via said auxiliary rails.

2. The vehicle test bench according to claim 1, wherein said additional excitation axis (R2) extends transverse or at an angle of 90° to said main excitation axis (R1).

3. The vehicle test bench according to at least one of the preceding claims, wherein said additional actuator system (Z) comprises a servo system independent of said main actuator system (H).

4. A method for controlling a vehicle test bench according to at least one of the preceding claims, comprising the steps of: controlling said main actuator system (H) to generate an excitation along said main excitation axis (R1); and activating said additional actuator system (Z) to generate an excitation along said additional excitation axis (R2) independently of the control of said main actuator system (H).

## Revendications

1. Banc d'essai de véhicule, destiné à contrôler des véhicules (1), comprenant
- des éléments de réception (A), les éléments de réception (A) comprenant chacun un plateau (11) ayant une zone de support pour venir en contact avec une roue du véhicule (1) ;
- un système d'excitation (S) relié à l'élément de réception (A) pour appliquer des fréquences d'excitation,
dans lequel
le banc d'essai de véhicule comprend une pluralité de systèmes d'excitation (S), et le véhicule (1) susceptible d'être positionné sur le banc d'essai peut être excité par les systèmes d'excitation (S) à au moins une fréquence d'excitation,
chaque système d'excitation (S) comprend un système d'actionneur principal (H) présentant un organe de réglage principal (2) mobile le long d'un axe d'excitation principal (R1), et un système d'actionneur auxiliaire (Z) présentant un organe de réglage auxiliaire (9) mobile le long d'un axe d'excitation auxiliaire (R2), et
le système d'actionneur auxiliaire (Z) se déplace avec l'organe de réglage principal (2), et l'axe d'excitation principal (R1) s'étend dans une direction différente de celle de l'axe d'excitation auxiliaire (R2) ;
l'organe de réglage auxiliaire (9) est reçu à une extrémité de l'organe de réglage principal (2) et peut être déplacé le long de l'axe d'excitation principal (R1) au moyen de l'organe de réglage principal (2) ;
le système d'actionneur auxiliaire (Z) est disposé entre l'élément de réception (A) et le système d'actionneur principal (H) ;
le système d'actionneur principal (H) est réalisé pour exciter le véhicule (1) le long de l'axe d'excitation principal (R1), et l'axe d'excitation principal (R1) est l'axe vertical ;
le système d'actionneur auxiliaire (Z) est réalisé pour exciter le véhicule (1) le long de l'axe d'excitation auxiliaire (R2), et l'axe d'excitation auxiliaire (R2) est un axe horizontal ;
**caractérisé en ce que**
le système d'actionneur principal (H) comprend un actionneur principal présentant l'organe de réglage principal (2), et le système d'actionneur principal (H) est disposé sur une fondation de manière mobile en coulissement dans un plan horizontal ;
l'actionneur principal du système d'actionneur principal (H) est prévu sur un élément de fixation par l'intermédiaire de rails, et l'actionneur principal peut être déplacé en coulissement le long de rails ;
l'actionneur principal du système d'actionneur principal (H) est monté sur l'élément de fixation par l'intermédiaire de premiers rails (10) et de seconds rails, et les premiers rails (10) s'étendent selon une première direction de coulissement, et les seconds rails s'étendent selon une seconde direction de coulissement qui s'étend dans une direction différente de la première direction de coulissement ; et
pour déplacer le plateau (11) le long de l'axe d'excitation auxiliaire (R2) de l'organe de réglage auxiliaire (9), il est prévu des rails auxiliaires sur lesquels est monté le plateau (1), le poids du véhicule étant encaissé par les rails auxiliaires.

2. Banc d'essai de véhicule selon la revendication 1, dans lequel l'axe d'excitation auxiliaire (R2) s'étend transversalement ou selon un angle de 90° par rapport à l'axe d'excitation principal (R1).

3. Banc d'essai de véhicule selon l'une au moins des revendications précédentes, dans lequel le système d'actionneur auxiliaire (Z) comprend un système d'asservissement indépendant du système d'actionneur principal (H).

4. Procédé pour piloter un banc d'essai de véhicule selon l'une au moins des revendications précédentes, comprenant les étapes consistant à :
piloter le système d'actionneur principal (H) pour générer une excitation le long de l'axe d'excitation principal (R1) ; et
piloter le système d'actionneur auxiliaire (Z) pour générer une excitation le long de l'axe d'excitation auxiliaire (R2) indépendamment du pilotage du système d'actionneur principal (H).
